# EUROPEAN PATENT SPECIFICATION

(11) **EP 1 224 788 B1**
(45) Date of publication and mention of the grant of the patent: **23.06.2004**
(21) Application number: 00989664.8
(22) Date of filing: 20.10.2000
(51) Int. Cl.: H04L 29/06, H04L 12/46, H04L 12/14

(54) **LOCATION-BASED IDENTIFICATION FOR USE IN A COMMUNICATIONS NETWORK**
STANDORTABHÄNGIGE IDENTIFIZIERUNG ZUR VERWENDUNG IN EINEM KOMMUNIKATIONSNETZ
IDENTIFICATION A SITE FIXE UTILISABLE DANS UN RESEAU DE COMMUNICATIONS

(30) Priority: 22.10.1999 US 161093 P
(43) Date of publication of application: 24.07.2002
(73) Proprietor: Nomadix, Inc., Westlake Village, California 91361 (US)
(72) Inventor: SHORT, Joel, E., Los Angeles, CA 90049 (US); LOGAN, Mark, F., Santa Monica, CA 90405 (US); PAGAN, Florence, C., I., Los Angeles, CA 90025 (US)
(74) Representative: Johnstone, Douglas Ian
(86) International application number: PCT/US2000/041349
(87) International publication number: WO 2001/033808

(56) References cited:
- WO-A-98/36587
- US-A- 4 691 346
- US-A- 5 651 058
- US-A- 5 889 470
- US-A- 5 946 308

## Description

### FIELD OF THE INVENTION

The present invention relates generally to an identification process within a communications network and, more particularly, to a method and apparatus for implementing location-based identification in a communications network.

### BACKGROUND OF THE INVENTION

While desktop computers generally remain a part of the same network for a substantial period of time, laptops, handhelds, personal digital assistants (PDAs), cellphones or other portable computers (collectively "portable computers") are specifically designed to be transportable. As such, portable computers are connected to different networks at different times depending upon the location of the computer. In a common example in which the portable computer serves as an employee's desktop computer, the portable computer is configured to communicate with their employer's network, i.e., the enterprise network. When the employee travels, however, the portable computer may be connected to different networks that communicate in different manners. In this regard, the employee may connect the portable computer to the network maintained by an airport, a hotel, a cellular telephone network operator or any other locale in order to access the enterprise network, the Internet or some other on-line service. The portable computer is also commonly brought to the employee's residence where it is used to access various networks, such as, the enterprise network, a home network, the Internet and the like. Since these other networks are configured somewhat differently, however, the portable computer must also be reconfigured in order to properly communicate with these other networks. Typically, this configuration is performed by the user each time that the portable computer is connected to a different network. As will be apparent, this repeated reconfiguration of the portable computer is not only quite time consuming, but is also prone to errors. The reconfiguration procedure may even be beyond the capabilities of many users or in violation of their employer's IT policy.

A universal subscriber gateway device has been developed by Nomadix, L.L.C. of Westlake Village, California and is described in detail in United States Patent Application Nos. 08/816,174, entitled "Nomadic Router", filed on March 12, 1997, in the name of inventors Short et. al.; 09/458,602, entitled "Systems and Methods for Authorizing, Authenticating and Accounting Users Having Transparent Computer Access to a Network Using a Gateway Device", filed on December 08, 1999, in the name of inventors Pagan et. al.; and 09/458,569, entitled " Systems and Methods for Redirecting Users Having Transparent Computer Access to a Network Using a Gateway Device Having Redirection Capability" filed on December 08, 1999, in the name of inventors Short et. al. These applications have been assigned to the same assignee as the present invention.

The gateway device serves as an interface connecting the user/subscriber to a number of networks or other online services. For example, the gateway device can serve as a gateway to the Internet, the enterprise network, or other networks and/or on-line services. In addition to serving as a gateway, the gateway device automatically adapts to the protocols and other parameters of the host, in order that it may communicate with the new network in a manner that is transparent both to the user/subscriber and the new network. Once the gateway device has appropriately adapted to the user's host, the host can appropriately communicate via the new network, such as the network at a hotel, at home, at an airport, or any other location, in order to access other networks, such as the enterprise network, or other online services, such as the internet.

The portable computer user/subscriber, and more specifically the remote or laptop user, benefits from being able to access a myriad of communication networks without having to undergo the time-consuming and all-too-often daunting task of reconfiguring their host in accordance with network specific configurations. From another perspective, the network service provider benefits from avoiding "on-site" visits and/or technical support calls from the user who is unable to properly re-configure the portable computer. In this fashion, the gateway device is capable of providing more efficient network access and network maintenance to the user/subscriber and the network operator.

Gateway devices are typically used to provide network access to the remote portable computer user, such as users in hotels, airports and other locations where the remote portable computer user may reside. Additionally, gateway devices have found wide-spread use in multi-resident dwellings as a means of providing the residents an *intranet* that networks the residents, broadband Internet access capabilities and the capacity to adapt to the variances of the resident's individual enterprise network needs. With the advent of even smaller portable computing devices, such as handhelds, PDAs, and the like, the locations where these users may reside becomes almost limitless. Someday we can envision wireless communications technology providing the capability to offer networking to all forms of land and air passengers. Gateway devices will likely provide the impetus for granting remote network access to all remote users communicating through wireless links and other foreseeable communication mediums.

US-A-5,946,308 discloses a network in which a gateway device maps end systems to a broadcast group based on destination. The results of this mapping are then used to map the access ports to those end systems within the broadcast group. Double mapping is employed for the purpose of establishing restricted groups within a network. The network application allows for broadcast packets to be identified and uniquely routed through the network such that transmission is limited only to those users or ports defined for a particular VLAN-ID.

In most of the remote user applications and the multi-resident dwelling applications, the gateway administrator (i.e. the network service provider) is not so much concerned with "who" the user/subscriber is, but rather, "where" the user resides or is located. Location based information is imperative to the network service provider who desires to manage the bill subscribers based on where they are physically located rather then who they are or what they may choose to use. For example, in the hotel scenario, the network service provider is more concerned with knowing that Room 301 has a seven day network subscription than knowing who the individual users are that are residing in Room 301. In this manner, the gateway administrator is able to provide Room 301, as opposed to individual residents in Room 301, with a location identifier. The gateway administrator or network provider relies on this information for ensuring accurate subscriber billing.

Additionally, the gateway administrator may benefit from location-based identification in the area of network management. For instance, by classifying within the network databases according to location the gateway device is able to provide network options to subscribers based upon where they are located. By way of example, if the gateway device has "learned" through location identification that Room 301 is a suite, thereby affording its customers additional service privileges, the gateway device can provide these additional service privileges without the need to query the user/subscriber regarding suite status. The same type of location classification can be beneficial in the multiple-resident dwelling example (i.e. a specially classified building or wing), in the airport example (i.e. a specially designated network port area for first class travellers) or in any other network application that uses a gateway device to provide network access and network adaptation.

### SUMMARY OF THE INVENTION

According to one aspect, the present invention consists in a network device capable of providing location-based identification to network subscribers, comprising a processor that communicates with an access concentrator to determine connection ports of host-generated data packets, and a database that stores the associated connection ports, characterised in that the processor determines respective identifiers assigned to the respective connection ports based upon location of the connection ports, the database stores the identifiers, and the processor identifies connection ports within a network that have been granted network authorisation based upon the respective identifiers.

According to another aspect, the present invention consists in a method for implementing location-based identification in a communications network, comprising the steps of, establishing a network connection between a host and a network, transmitting data packets from the host through a location-specific, connection port, characterised by the steps of identifying the location-specific, connection port at an access concentrator in the form of a port identifier based upon the location of the connection port, communicating the port identifier to a network device, storing the port identifier in a database in communication with the network device, and identifying connection ports that have been granted network authorisation based upon the respective port identifiers.

The network device is typically a gateway device.

In one embodiment of the invention, the network device, for example a gateway device, is capable of communicating with an access concentrator to determine the port identity corresponding to the received MAC address. The gateway device is then able to use the location-based identities to structure billing schemes and manage the overall network that the service provider has established.

In an embodiment of the method for implementing location-based identification, the process of identifying the port at an access concentrator includes tagging the network packets at the access concentrator with a port identifier that corresponds to a media access control (MAC) address. The access concentrator and the network device will tag and communicate port numbers by assigning VLAN (Virtual Local Area Network) identifiers to the ports.

In another embodiment of the method for implementing location-based identification, the process of identifying the port at an access concentrator includes transmitting a port identifying query from a network device, typically a gateway device, to an access concentrator and sending a port identifying response from the access concentrator to the network device. The network device and the access concentrator have corresponding agents configured to send and respond to queries. For example, the gateway device and access concentrator may incorporate an SNMP agent or an XML agent to communicate via queries

In yet another embodiment of the method for implementing location-based identification in a communication system, the network device, typically a gateway device, accesses a database to determine the identification status of connection ports within a communications network. The identification status of the connection ports are then used to execute a network system application such as billing, authentication or any other network management application.

### BRIEF DESCRIPTION OF THE DRAWINGS

Figure 1 is a block diagram of a communication system that includes a gateway device for automatically configuring one or more hosts to communicate via the gateway device with other networks or other online services.
Figure 2 is a block diagram of a simplified communication network configured so as to allow for location-based identification, in accordance with an embodiment of the present invention.
Figure 3 is a block diagram of a communication network using DSL as the communication medium and implementing VLAN tagging to incorporate location-based identification, in accordance with an embodiment of the present invention.
Figure 4 is a block diagram of a communication network highlighting the unique VLAN identification feature of VLAN tagging, in accordance with an embodiment of the present invention.
Figure 5 is a block diagram of a communication network using DSL as the communication medium and implementing SNMP querying to incorporate location-based identification, in accordance with an embodiment of the present invention.
Figure 6 is a flow diagram of a general method for location-based identification in a communication network, in accordance with an embodiment of the present invention.
Figure 7 is a flow diagram of a method for location-based identification in a communication network implementing VLAN tagging, in accordance with an embodiment of the present invention.
Figure 8 is a flow diagram of a method for location-based identification in a communication network implementing SNMP querying, in accordance with an embodiment of the present invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

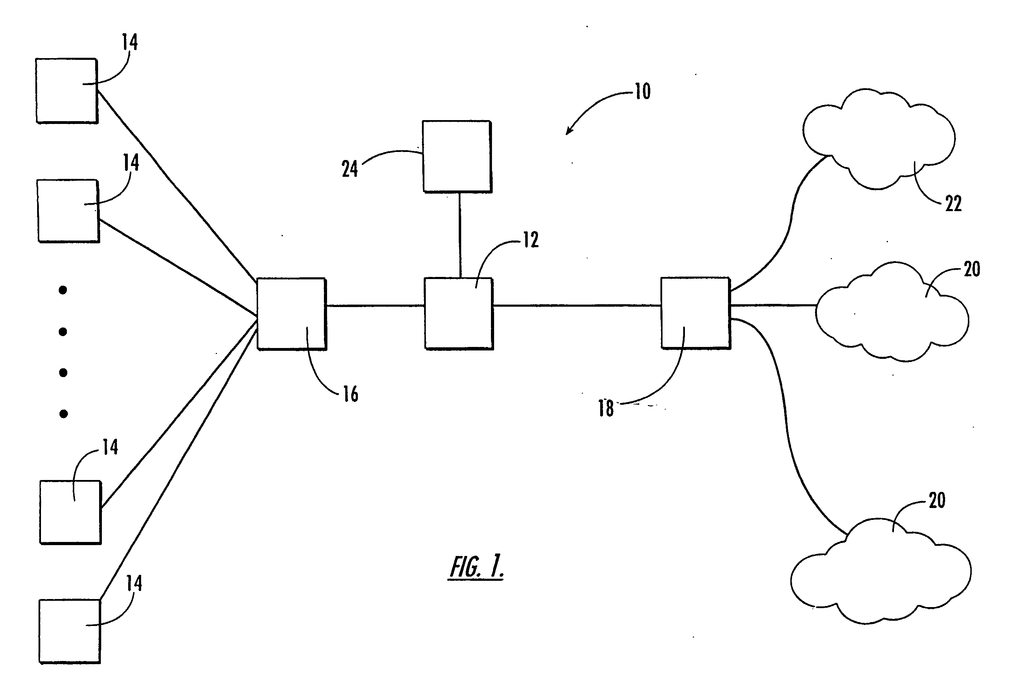

Referring now to Figure 1, a network system 10 that includes a gateway device 12 is depicted in block diagram form. The network system typically includes a plurality of computers/hosts 14 that access the system in order to gain access to networks or other online services. For example, the hosts can be in communication with ports that are located in different rooms of a hotel or a multi-dwelling residence. Alternatively, the hosts can be in communication with ports in an airport, an arena, or the like. The network system also includes a gateway device that provides an interface between the plurality of hosts and the various networks or other online services. Most commonly, the gateway device is located proximate the hosts at a relatively low position in the structure of the overall network system. (i.e. the gateway device will be located within the hotel, multi-unit residence, airport, etc.) However, the gateway device can be located at a higher position in the overall network system such as at a Point of Presence (PoP) or a Network Operating Center (NOC), if so desired.

Although the gateway device can be physically embodied in many different fashions, the gateway device typically includes a controller and a memory device in which commands are stored that define the operational characteristics of the gateway device. Alternatively, the gateway device can be embedded within another network device, such as an access concentrator or a router, or the commands that define the functioning of the gateway device can be stored on a PCMCIA card that can be executed by one or more hosts in order to automatically reconfigure the host(s) to communicate with a different network.

The network system **10** also typically includes an access concentrator **16** positioned between the hosts **14** and the gateway device **12** for multiplexing the signals received from the plurality of communications onto a link to the gateway device. Depending upon the medium by which the hosts are connected to the access concentrator, the access concentrator can be configured in different manners. For example, the access concentrator can be a digital subscriber line access module (DSLAM) for signals transmitted via regular telephone lines, a cable modem termination system (CMTS) for signals transmitted via coaxial cables, a wireless access point (WAP) for signals transmitted via a wireless network, a switch or the like. As also shown in Figure 1, the network system typically includes one or more routers **18** and/or servers (not shown in Figure 1) in communication with a plurality of networks **20** or other online services **22.** While the network system is depicted to have a single router, the network system will typically have a plurality of routers, switches, bridges, or the like that are arranged in some hierarchical fashion in order to appropriately route traffic to and from the various networks or other online services. In this regard, the gateway device typically establishes a link with one or more routers. The routers, in turn, establish links with the servers of other networks or other online service providers, such as internet service providers, based upon the subscriber's selection.

The gateway device **12** is specifically designed to adapt to the configuration of each of the hosts **14** that log onto the network system **10** in a manner that is transparent to the subscriber and the network. In the typical network system that employs dynamic host configuration protocol (DHCP) service, an IP address is assigned to the host that is logging onto the network through communication with the gateway device. The DHCP service can be provided by an external DHCP server **24** or it can be provided by an internal DHCP service located within the gateway device. Upon opening their web browser or otherwise attempting to access an on-line service, the gateway device will direct the subscriber to enter some form of an identifier such as their ID and password. In an alternate embodiment of the device, it is anticipated that the gateway device will be able to automatically detect this information upon connection of the host to the network or any attempt to log in. The gateway device then determines if the subscriber is entitled to access the communication system, the level of access and/or the type of services to which the subscriber is entitled according to an Authentication, Authorization and Accounting (AAA) procedure that is described by U.S. Patent Application Nos. 08/816,174, 09/458,602 and 09/458,569. An AAA service, which is a of subscriber records, may be an AAA server remote to the gateway device or the AAA service may comprise a database incorporated into the physical embodiment housing the gateway device.

Assuming that the subscriber has been authenticated and has authorization, the gateway device typically presents subscribers with a home page or control panel that identifies, among other things, the online services or other communication networks that are accessible via the gateway device. In addition, the home page presented by the gateway device can provide information regarding the current parameters or settings that will govern the access provided to the particular subscriber. As such, the gateway administrator can readily alter the parameters or other settings in order to tailor the service according to their particular application. Typically, changes in the parameters or other settings that will potentially utilize additional resources of the network system will come at a cost, such that the gateway administrator will charge the subscriber a higher rate for their service. For example, a subscriber may elect to increase the transfer rate at which signals are transmitted across the communication network and pay a correspondingly higher price for the expedited service.

The home page also permits the subscriber to select the network **20** or other online services **22** that the subscriber wishes to access. For example, the subscriber can access the enterprise network on which the host is typically resident. Alternatively, the subscriber can access the internet or other on-line services. Once the subscriber elects to access a network or other online service, the gateway device establishes appropriate links via one or more routers **18** to the desired network or online service.

Thereafter, the subscriber can communicate freely with the desired network **20** or other online service **22**. In order to support this communication, the gateway device **12** generally performs a packet translation function that is transparent to the user/subscriber and the network. In this regard, for outbound traffic from the host **12** to the communication network or other on-line service, the gateway device changes attributes within the packet coming from the user/subscriber, such as the source address, checksum, and application specific parameters, to meet the criteria of the network to which the user/subscriber has accessed. In addition, the outgoing packet includes an attribute that will direct all incoming packets from the accessed network to be routed through the gateway device. In contrast, the inbound traffic from the accessed network or other online service that is routed through the gateway device, undergoes a translation function at the gateway device so that the packets are properly formatted for the user/subscriber's host. In this manner, the packet translation process that takes place at the gateway device is transparent to the host, which appears to send and receive data directly from the accessed communication network. Additional information regarding the translation function is provided by United States Patent Application No. 08/816,714. By implementing the gateway device as an interface between the user/subscriber and the communication network or other online service, however, the user/subscriber will eliminate the need to re-configure their host **12** upon accessing subsequent networks.

In one embodiment of the present invention, the gateway device implements location-based identification. In accordance with the present invention location-based identification may also be embedded within another network device, such as an access concentrator or a router, or the commands that define location-based identification can be stored on a PCMCIA card that can be executed by one or more hosts in order to identify the ports from which the hosts access the network system. Location based identification allows the network system to grant network access to a specific location (e.g. a hotel room, a specific apartment address, etc.) rather than a specific user or host residing at the location. Basing identification on location, as opposed to user or host, allows the gateway administrator (i.e. network service provider) to manage the network system according to user locations and to provide for a billing scheme according to user locations.

In one embodiment of the present invention the gateway device includes a processor that communicates with an access concentrator to determine connection ports of host-generated data packets. Once the connection ports are determined they are stored within a database, such as a connection table, that is in communication with the gateway device processor. In a typical gateway device the processor will employ the use of VLAN protocol as the communication link between the gateway device and the access concentrator. While VLAN is by definition, Virtual Local Area Network, in the context we are concerned with VLAN is the IEEE-standard protocol 802.1 Q used to implement VLAN. VLAN technology is well known in the art and has been used to create virtual networks by employing VLAN processors between network interfaces to logically bridge networks together. VLAN works on the concept of tracking ports by tagging the IP packet with an identifier. By using VLAN technology, the gateway device can provision subscriber access to the network on a localized port basis. For example, in a multi-resident dwelling environment, a network service provider may want to provision Internet access to individual units or apartments; each unit is assigned a VLAN ID (a port-location tag). In this example, a resident within the unit can choose to subscribe to the service and the gateway device will then allow Internet access from the resident's unit, regardless of which host or who the user is within the unit. Typically, hosts are granted network access via a MAC (Media Access Control) address that connects the device to a shared network medium. The use of VLAN tagging overrides the MAC address identification process.

VLAN ports can be "tagged" at any level, for example, a specific room in a hotel or an apartment building can be assigned a tag, or a floor within a building, a wing within a building or the building itself may be assigned an individual tag. Alternatively, multiple ports may be tagged to a single room. The gateway device uses a port-location authorization table to manage the assigned ports and ensure accurate billing for services used by a particular port.

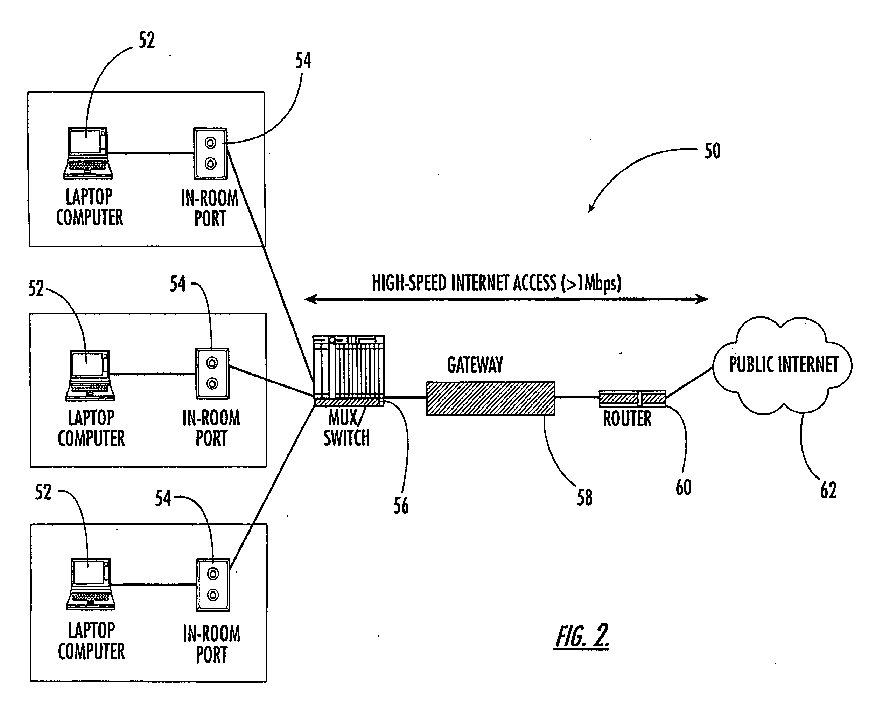

Figure 2 illustrates a simplified network system **50** configured so as to allow for location-based identification supported by VLAN tagging. A series of portable computers/hosts **52** are located within separate entities. The separate entities may include apartment units, hotel rooms, airport kiosks, retail outlets or the like. The user (not shown in Figure 2) connects to the network service provider via a port **54** in the room. The communication between the host and the port may be physical; such as cable to connector, or the communication may be wireless. A modem (not shown in Figure 1), either internal within the hosts or external, may be required to provide access to the network service provider. The medium used to establish the connection may include standard telephone dial-in, cable, CAT5 high quality cable, DSL (Digital subscriber Line), wireless or any other applicable connection medium.

Once the host establishes connections it begins sending out standard IP (Internet Protocol) packets. An access concentrator **56** initially receives the IP packets. The access concentrator serves as a switch that multiplexes signals received from numerous ports and sends them out one output port. Depending upon the medium by which the hosts are networked to the access concentrator, the access concentrator can be configured in different manners. For example, the access concentrator can be a digital subscriber line access module (DSLAM) for signals transmitted via regular telephone lines, a cable modem termination system (CMTS) for signals transmitted via coaxial cables, a wireless access point (WAP) for signals transmitted via a wireless network, a switch or the like. For VLAN tagging to be implemented the access concentrator must be able to support VLAN technology. If the access concentrator does not support VLAN tagging or a similar tagging means then location-based identification may be implemented by the alternative SNMP (Simple Network Management Protocol) query embodiment of the present invention that is detailed in later discussion herein. Access concentrators are well known by those of ordinary skill in the art and most DSLAMs or other access concentrators will support VLAN technology.

In the VLAN tagging embodiment of the present invention once the access concentrator receives the IP packet it knows what host sent it (from the MAC address header) but it does not know where the host is located. The access concentrator through the use of a VLAN processor has the capability to "know" from what port each packet arrived. It then re-configures the packet by adding a header, typically between the Ethernet and IP portions of the packet according to the 802.1Q IEEE VLAN protocol, identifying the port number and the host. These packets are then forwarded via the single output to the gateway device **58**. The gateway device removes the port information and records the data in a database, such as a connection table. A typical connection table maps a port identifier to a MAC address for all incoming packets routed from the access concentrator. The dynamic nature of the table would allow for the subscriber to change locations and access the network system through an alternate port that has been identified and authorized for use. Once the port number is recorded the VLAN portion is stripped from the packet header and the packet is forwarded on to a router **60** and subsequently the Internet **62** or another network in the system. The VLAN header may be placed back on a packet that is being communicated from the network to the host so that the access concentrator knows where the packet is to be sent. Additionally, tagging packets coming from the network back to the subscriber provides the gateway device to be interoperable with most access concentrators that are in VLAN tagging mode. This allows for the access concentrators that comprise a composite communication network to communicate in "trunked" line fashion.

It should be noted that while other devices in the network system may communicate in VLAN protocol, in this embodiment the only two devices that require VLAN protocol communication are the access concentrator and the gateway device. The host devices are generally incapable of communicating in VLAN and the downstream network components (routers, switches, bridges, etc.) are inconsequential in this regard.

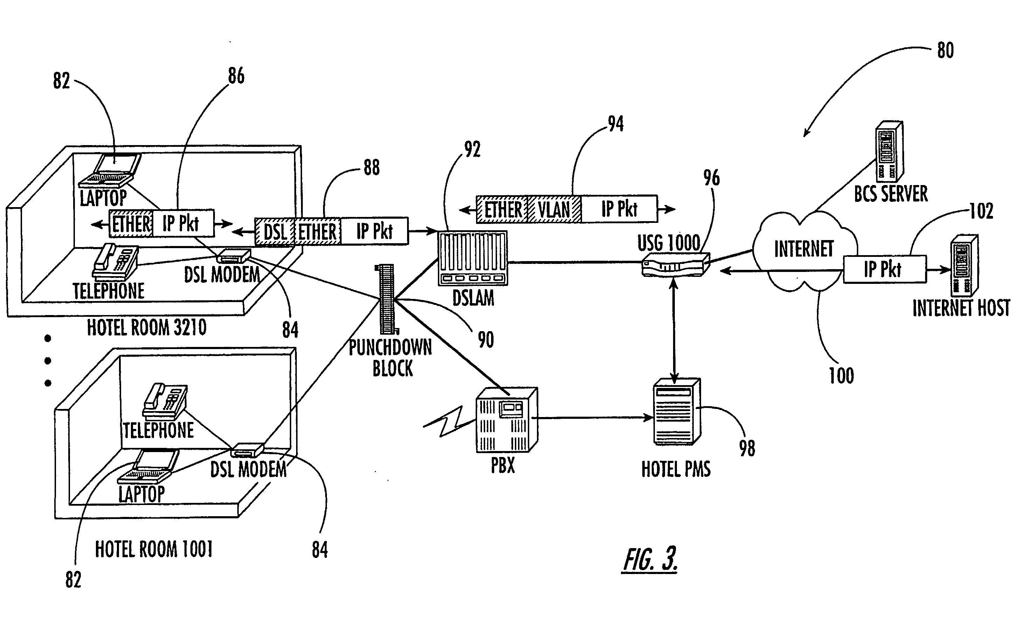

Figure 3 is a block diagram that illustrates a network configuration using DSL as the communication medium and VLAN tagging as a means of incorporating location-based identification. This networking configuration is shown by way of example, and other communication medium, such as cable, wireless or the like, may also be used to configure a network using VLAN tagging to incorporate location-based identification. The network system **80** includes hosts **82**, typically portable computers and in this illustration conventional laptop computers. The hosts in this example are located in individual hotel rooms, however the hosts could be located in other entities, such as apartment units, office rooms, airport kiosks or the like. The hosts access the network via a digital subscriber line (DSL) modem **84**. Once a communication link is established the hosts send out standard IP packets **86** to communicate data within the network. At the DSL modem a DSL header is attached to the packets, resulting in the DSL/Ethemet/IP packet **88**. The DSL header serves to identify the DSL modem or the port. The packets are then routed through a connection point, shown in this example as punchdown block **90**, before an access concentrator 92 receives them.

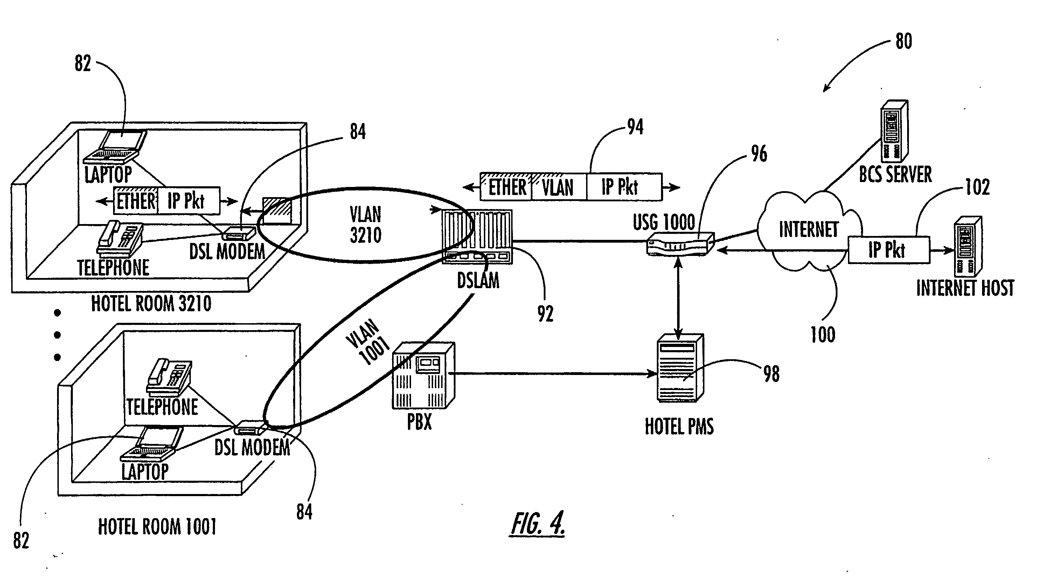

In this embodiment the access concentrator is a DSLAM that is capable of communicating in VLAN (IEEE 802.1Q) protocol. The access concentrator determines the port from which the packet was sent and assigns an appropriate VLAN identification number to the packet based upon the port from which it was sent. As shown in Figure 4 each port, in this example each hotel room has a unique VLAN ID. For example, hotel room 3210 may be assigned VLAN ID 3210 and hotel room 1001 may be assigned VLAN ID 1001. A table within the access concentrator maps VLAN IDs to the associated room number, kiosk number, etc. A VLAN header is added to the packet, resulting in the Ethernet over VLAN over IP packet **94** shown in Figure 4. These packets are then communicated to the gateway device **96** where the VLAN portion of the header is removed and the VLAN ID is referenced to a specific port within a communications table database associated with the gateway device. In turn, the gateway device may use this location-based identification for billing purposes, such as the Hotel PMS system **98** shown in Figure 4, network authorization or other network purposes. After the gateway device has logged the port related information the packets are communicated forward to other networks, such as the Internet **100**. In this instance the packets are communicated as standard IP packets **102**.

It should be noted that the gateway device or any other network device implementing location-based identification will require configuration upon initial installation to accommodate location-based identification. If VLAN tagging is to be the basis for location-based identification the gateway device or similar network device must be configured to allow for this communication to occur. A gateway administrator will need to configure the gateway so that VLAN ID's are assigned to individual entities or ports (i.e. room numbers, apartment units, etc.). Port location assignments can be added, updated or deleted according to gateway administrator commands. Adding a port-assignment to the gateway device database may involve assigning a port number, assigning a location to the port number and a conditional state for this port-location. Conditional states may be associated with billing schemes. For instance port-locations may be assigned a "no charge" state, a "charge for use" state, a "blocked" state or any other state may be assigned.

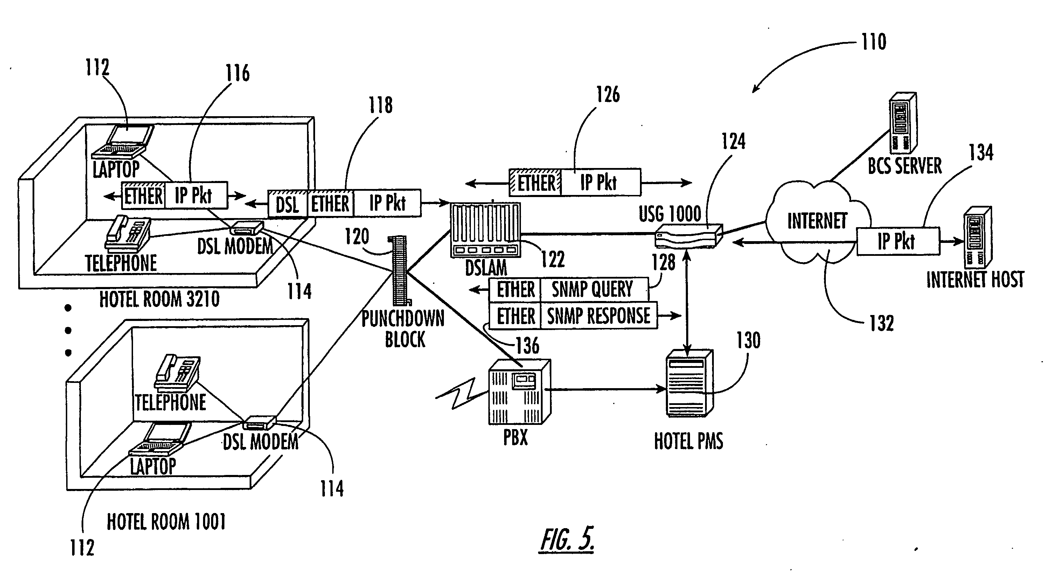

In another embodiment of the present invention the location-based identification is implemented by the processor within a gateway device using a query agent capable of requesting identification data related to the connection port of host-generated data packets. A typical gateway processor will implement SNMP (Simple Network Management Protocol) querying or a similar querying agent may be implemented. The SNMP query embodiment is generally used if the access concentrator does not support the VLAN protocol. Figure 5 is a block diagram that illustrates a network configuration using DSL as the communication medium and SNMP queries as a means of incorporating location-based identification. This networking configuration is shown by way of example, other communication medium, such as cable, wireless or the like, may also be used to configure a network using SNMP queries to incorporate location-based identification. The network **110** includes hosts **112,** typically portable computers and in this illustration conventional laptop computers. The hosts in this example are located in individual hotel rooms, however the hosts could be located in other entities, such as apartment units, office rooms, airport kiosks or the like. The hosts access the network via a digital subscriber line (DSL) modem **114**. Once a communication link is established the hosts send out standard IP data packets **116**, to communicate data within the network. At the DSL modem a DSL header is attached to the packets, resulting in the DSL/Ethernet/IP packet **118.** The packets are then routed through a connection point, shown in this example as punchdown block **120,** before an access concentrator 122 receives them.

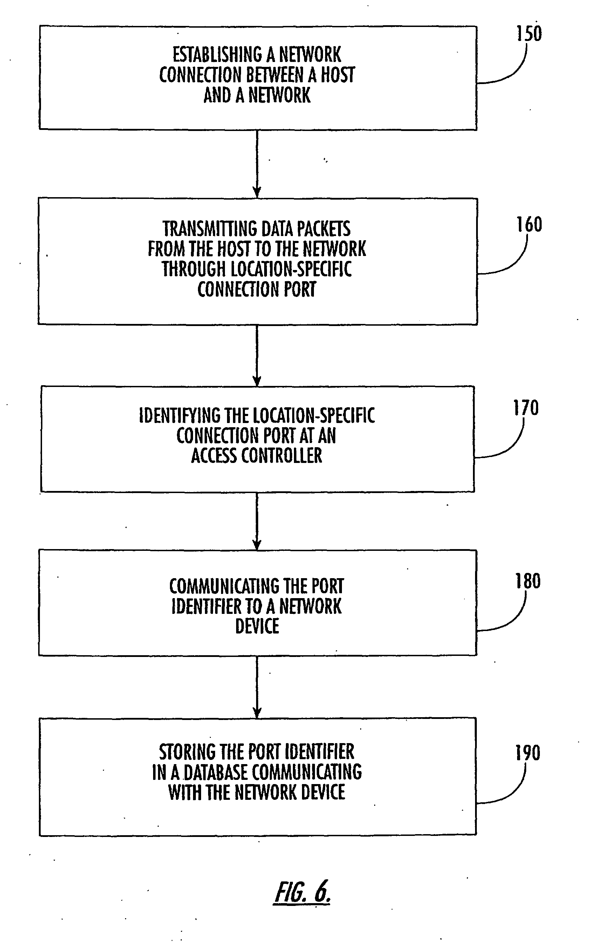

In this application, since the access concentrator does not implement VLAN tagging, the packets communicated between the access concentrator and the gateway device **124** are standard IP packets **126**. The IP packets that are received by the gateway device are devoid of any information related to location (i.e. ports). As shown in Figure 5, the gateway device must be configured to send out SNMP query packets **128** back to the access concentrator asking the concentrator from which port did this packet (i.e. this MAC address) come from. The access concentrator that is in communication with a database that ties MAC addresses to ports, is then able to reply to the query with an SNMP query response 136 that ties the MAC address of the packet to a port number. The access concentrator responds by sending an IP packet back to the gateway device identifying the port number. The gateway removes the port number and associated MAC address from the SNMP header and tables the information in an appropriate communications table database associated with the gateway device. In turn, the gateway device may use this location-based identification for billing purposes, such as the Hotel PMS system 130 shown in Figures 5 and 6, network authorization or any other network purpose. Once the database has proper port number to MAC address mapping for any specific location, the gateway device will no longer be required to send out SNMP queries to the access concentrator. In this manner, the SNMP query procedure is typically only required to be performed once for any given port. After the gateway device has logged the port related information into the database the packets are communicated forward to other networks, such as the Internet **132.** In this instance the packets are communicated as standard IP packets **134**.

It should be noted that in the SNMP query embodiment the gateway device and the access concentrator must be SNMP compatible. Both the gateway device and the access concentrator must be configured with the SNMP agent to receive, send and act upon SNMP queries. If other querying agents are used to implement location-based identification then both the gateway device or a similar network device and the access concentrator must be configured with the chosen querying agent.

In accordance with an embodiment of the present invention, a method for implementing location-based identification in a communication network is shown in the flow chart diagram of Figure 6. At step **150**, a network connection is established between a host and a network. The communication medium that may be used to establish the connection includes telephone line, DSL, conventional cable, CAT5 cable, wireless and the like. At step **160**, data packets, typically IP data packets are transmitted from the host to the network through a location-specific connection port. The location-specific connection port is typically located in a hotel room, an airport kiosk, an apartment building or a similar remote locale. At step **170,** the location-specific connection port is identified at an access concentrator. The identification process that occurs at the access concentrator may include VLAN tagging of the data packets, SNMP query responses or a similar identification process. Once the location-specific connection port has been identified in the form of a port identifier it is then, at step **180,** communicated to a network device, typically a gateway device. The network device will either comprise or be in communication with a database that, at step **190,** stores the port identifiers in order to identify the ports that have been authorized network access.

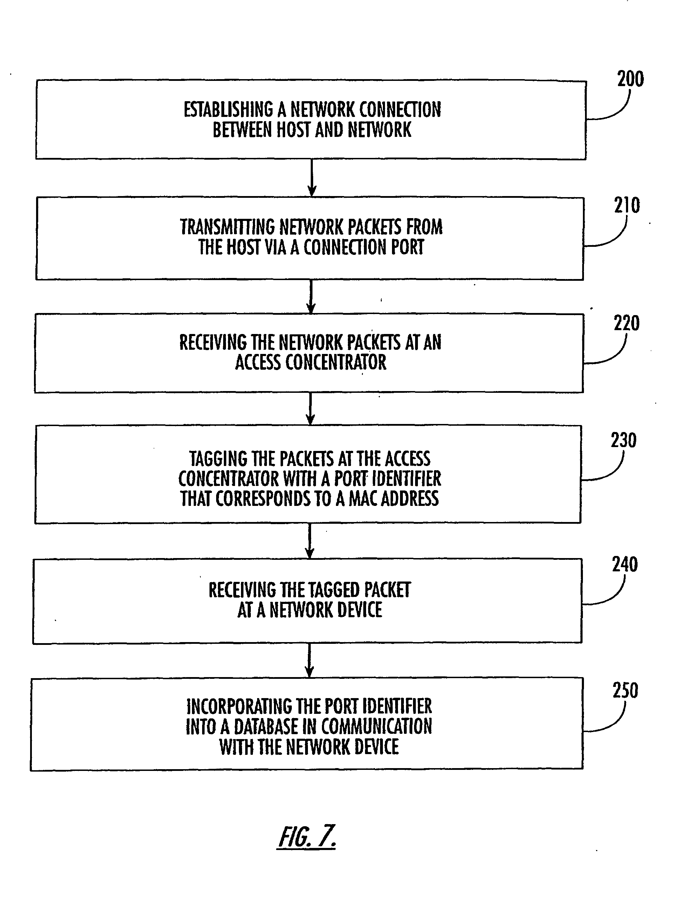

In accordance with another embodiment of the present invention, a method for location-based identification implementing VLAN tagging in a communication network is shown in the flow diagram of Figure 7. At step **200**, a network connection is established between a host and a network. The communication medium that may be used to establish the connection includes telephone line, DSL, conventional cable, CAT5 cable, wireless and the like. At step **210**, the host sends network data packets to the network via a connection port and at step **220** the network data packets are received at an access concentrator. The access concentrator may comprise a digital subscriber line access module (DSLAM) for signals transmitted via regular telephone lines, a cable modem termination system (CMTS) for signals transmitted via coaxial cables, a wireless access point (WAP) for signals transmitted via a wireless network, a switch or the like. The access concentrator will be configured with an agent that allows for port identification. For example, an access concentrator may be configured with a VLAN agent that provides for VLAN tagging of the packets transmitted from a location-specific connection port.

At step **230**, the access concentrator tags the network data packet with a port identifier that corresponds to the media access control (MAC) address. The tagging of the network data packet is typically performed using VLAN technology. Each port in the network service provider's entity is configured as a virtual LAN and therefore, each port has its own VLAN identifier. At step **240**, the tagged data packet is received at a network device, typically a gateway device, where the port identifying information is removed from the packet header. At step **250** the port identifier is incorporated into a database that is in communication with the network device. Once the location-based data, in this instance the port identifier, is incorporated into the database it can be called upon for billing scheme purposes, authentication purposes or for any other use in overall network management systems.

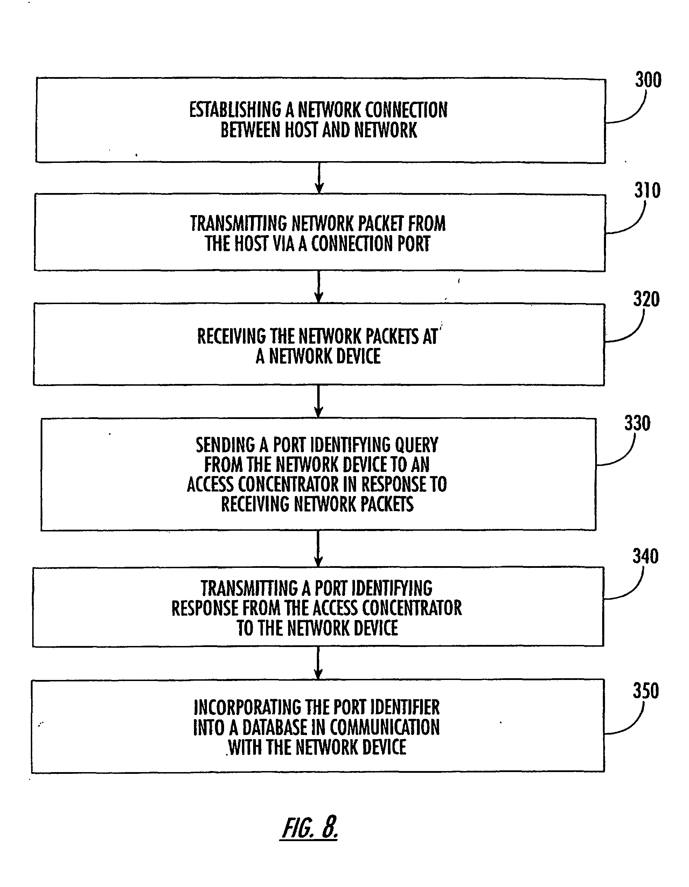

In accordance with another embodiment of the present invention, a method for location-based identification implementing querying in a communication network is shown in the flow chart diagram of Figure 8. At step **300**, a network connection is established between a host and a network. The communication medium that may be used to establish the connection includes telephone line, DSL, conventional cable, CAT5 cable, wireless and the like. At step **310,** the host sends network data packets to the network via a connection port and at step **320** the network packets are received at a network device, typically a gateway device.

The network device is typically configured with an agent that is capable of generating queries to other network devices. For example the network interface device may be configured with a SNMP agent that is capable of generating SNMP queries or another similar agent, such as XML, may be used. At step **330** the network device sends a port identifying query to an access concentrator, in response to receiving the network data packets. The access concentrator may comprise a digital subscriber line access module (DSLAM) for signals transmitted via regular telephone lines, a cable modem termination system (CMTS) for signals transmitted via coaxial cables, a wireless access point (WAP) for signals transmitted via a wireless network, a switch or the like. Characteristically, the access concentrator will have an agent capable of responding to the queries sent by the network interface device. For example, the access concentrator may be configured with a SNMP agent that is capable of generating SNMP responses, or another similar agent, such as XML, corresponding to the agent used in the network interface device may also be used. Additionally, the access concentrator is configured so as to track port identity versus MAC address of incoming packet traffic.

At step **340,** the access concentrator sends a port identifying response back to the network device and at step **350** the port identifier is incorporated into a data base that is in communication with the network device. Once the location-based data, in this instance the port identifier, is incorporated into the database it can be called upon for billing schemes, authorization or for use in any other overall network management system.

The method and apparatus of the present invention provide for location-based identification of subscribers as opposed identifying subscribers based on the user or the device. In this manner the network system can administer billing schemes and network management (i.e. quality of service, billing maintenance, authorization, etc.) based upon the physical entity; the hotel room, the apartment unit, the airport kiosk, etc. where the user is located. This provides more options to the network service provider in terms of billing and network management.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limiting the scope of the present invention in any way.

## Claims

1. A network device capable of providing location-based identification to network subscribers, comprising
a processor (58,96,124) that communicates with an access concentrator (56,92,122) to determine connection ports (54) of host-generated data packets (86,116), and
a database that stores the associated connection ports,
**characterised in that** the processor (58,96,124) determines respective identifiers assigned to the respective connection ports (54) based upon location of the connection ports, the database stores the identifiers, and
the processor (58,96,124) identifies connection ports (54) within a network that have been granted network authorisation based upon the respective identifiers.

2. A network device as claimed in claim 1, wherein the processor (58,96,124) reads an identifier within a tagged portion of the data packet (88) to determine connection ports (54) of host generated data packets (86,116).

3. A network device as claimed in claim 1 or 2, wherein the processor (58,96) uses VLAN protocol as a communication link between the processor and the access concentrator (56,92).

4. A network device as claimed in claim 1, wherein the processor includes a querying agent capable of requesting identification data related to the connection port (54) of host-generated data packets (116).

5. A network device as claimed in claim 4, wherein the querying agent uses Simple Network Management Protocol (SNMP) as the communication link between the network device and the access concentrator (122).

6. A network device as claimed in claim 4 or 5, wherein the querying agent uses Extensible Markup Language (XML) as the communication link between the network device and the access concentrator (122).

7. A network device as claimed in any one of the preceding claims, wherein the processor (58,96,124) determines the identifier assigned to a respective connection port (54) in response to an initial transmission of a data packet (86,116) from the connection port.

8. A network device as claimed in any one of the preceding claims, wherein the processor (58,96,124) accesses the database in conjunction with a network system application to provide network subscriber billing information.

9. A network device as claimed in any one of the preceding claims, wherein the processor (58,96,124) accesses the database in conjunction with a network system application to provide the network subscribers with billing options.

10. A method for implementing location-based identification in a communications network, comprising the steps of:
establishing a network connection between a host (52,82,112) and a network;
transmitting data packets (86,116) from the host through a location-specific, connection port (54); **characterised by** the steps of
identifying the location-specific, connection port at an access concentrator (56,92,122) in the form of a port identifier based upon the location of the connection port;
communicating the port identifier to a network device (58,96,124);
storing the port identifier in a database in communication with the network device; and
identifying connection ports (54) that have been granted network authorisation based upon the respective port identifiers.

11. A method as claimed in claim 10, wherein identifying the location-specific, connection port (54) at an access concentrator (56,92,122) includes tagging the data packets (86) with a port identifier at the access concentrator.

12. A method as claimed in claim 11, wherein communicating the port identifier to a network device (58,96,124) includes transmitting the tagged data packets (94) to the network device.

13. A method as claimed in claim 11 or 12, wherein tagging the data packets (86) with a port identifier includes tagging the packets with a port identifier that corresponds to a media access control (MAC) address.

14. A method as claimed in claim 11, 12 or 13, wherein tagging the data packets (86) with a port identifier includes implementing the use of VLAN protocol.

15. A method as claimed in any one of the preceding claims 10 to 14, wherein the access concentrator (56,92,122) comprises a network element comprising a digital subscriber line access module (DSLAM), a wireless access point (WAP), a cable modem termination system (CMTS), or a switching device.

16. A method as claimed in claim 10, wherein identifying the location-specific, connection port (54) at an access concentrator (56,92,122) includes:
transmitting a port requesting query from the network device (124) to an access concentrator (122); and
transmitting a port identifying response from the access concentrator to the network device.

17. A method as claimed in claim 16, wherein transmitting a port requesting query from the network device (124) includes transmitting a SNMP (Simple Network Management Protocol) query.

18. A method as claimed in claim 16 or 17, wherein transmitting a port requesting query from the network device (124) includes transmitting an XML (Extensible Markup Language) query.

19. A method as claimed in claim 16, 17 or 18, wherein transmitting a port identifying response includes transmitting a port identifier that corresponds with a media access control (MAC) address.

20. A method as claimed in any one of the preceding claims 10 to 19, wherein the network device (58,96,124) includes a gateway device (124) that provides subscribers network access.

21. A method as claimed in any one of the preceding claims 10 to 20, wherein identifying the location-specific, connection port (54) comprises assigning a port identifier to a respective connection port in response to an initial transmission of a data packet (86,116) from the connection port.

22. A method as claimed in any one of the preceding claims 10 to 21, including accessing the database in conjunction with a network system application to provide network subscriber billing information.

23. A method as claimed in any one of the preceding claims 10 to 22, including accessing the database in conjunction with a network application to provide the network subscribers with billing options.

24. A method as claimed in any one of the preceding claims 10 to 23, including stripping the port identifier from the host-generated data packets (86,116) originating from a respective connection port (54) prior to transmission of the data packets through the network.

## Patentansprüche

1. Eine Netzwerkvorrichtung, fähig eine standortabhängige Identifizierung an die Netzwerkteilnehmer zu liefern, beinhaltend
einen Prozessor (58, 96, 124), der mit einem Zugangs-Konzentrotor (access concentrator) (56, 92, 122) kommuniziert, um Verbindungs-Ports (54) von host-erzeugten Datenpaketen (86, 116) zu ermitteln und
eine Datenbank, die die angeschlossenen Verbindungs-Ports abspeichert,
**dadurch gekennzeichnet, dass** der Prozessor (58, 96, 124) die jeweiligen Kennungen, die den jeweiligen Verbindungs-Ports (54) zugeordnet sind basierend auf dem Standort der Verbindungs-Ports ermittelt, die Datenbank die Kennungen speichert und
der Prozessor (58, 96, 124) die Verbindungs-Ports (54) innerhalb eines Netzwerks identifiziert, denen eine Netzwerkautorisierung basierend auf der zugehörigen Kennung gewährt worden ist.

2. Netzwerkvorrichtung wie sie in Anspruch 1 beansprucht worden ist, worin der Prozessor (58, 96, 124) eine Kennung innerhalb eines markierten Teils des Datenpakets (88) liest, um die Verbindungs-Ports (54) von host-erzeugten Datenpaketen (86, 116) zu ermitteln

3. Eine Netzwerkvorrichtung, wie sie in Anspruch 1 oder 2 beansprucht ist, worin der Prozessor (58, 96) ein VLAN-Protokoll als Kommunikationsverbindung zwischen dem Prozessor und dem Zugangs-Konzentrator (56, 92) benutzt.

4. Eine Netzwerkvorrichtung, wie sie in Anspruch 1 beansprucht ist, worin der Prozessor einen Abfrageagenten beinhaltet, fähig zur Abfrage der Identifikationsdaten bezogen auf den Verbindungs-Port (54) des host-erzeugten Datenpakets (116).

5. Eine Netzwerkvorrichtung, wie sie in Anspruch 4 beansprucht ist, worin der Abfrageagent ein Simple Network Management Protocol (SNMP) als Kommunikationsverbindung zwischen der Netzwerkvorrichtung und dem Zugangs-Konzentrator (122) benutzt.

6. Eine Netzwerkvorrichtung, wie sie in Anspruch 4 oder 5 beansprucht ist, worin der Abfrageagent eine Extensible Markup Language (XML) als Kommunikationsverbindung zwischen der Netzwerkvorrichtung und dem Zugangs-Konzentrator (122) benutzt.

7. Eine Netzwerkvorrichtung, wie sie in einem der vorhergehenden Ansprüche beansprucht ist, worin der Prozessor (58, 96, 124) die Kennung zugeordnet zu einem zugehörigen Verbindungs-Port (54) in Erwiderung auf eine anfängliche Übermittlung eines Datenpakets (86, 116) von dem Verbindungs-Port ermittelt.

8. Eine Netzwerkvorrichtung, wie sie in einem der vorhergehenden Ansprüche beansprucht ist, worin der Prozessor (58, 96, 124) die Datenbank in Verbindung mit einer Netzwerksystemanwendung zugänglich macht, um den Netzwerkteilnehmer mit der Abrechnungsinformation zu versorgen.

9. Eine Netzwerkvorrichtung wie sie in einem der vorhergehenden Ansprüche beansprucht ist, worin der Prozessor (58, 96, 124) die Datenbank in Verbindung mit einer Netzwerksystemanwendung zugänglich macht, um dem Netzwerkteilnehmer mit Abrechnungsoptionen zu versorgen.

10. Ein Verfahren zum Umsetzen einer standortabhängigen Identifizierung in einem Kommunikationsnetzwerk, beinhaltend die Schritte:
Aufbauen einer Netzwerkverbindung zwischen einem Host (52, 82, 112) und einem Netzwerk;
Übermitteln von Datenpaketen (86, 116) von dem Host durch einen standortspezifischen Verbindungs-Port (54); **gekennzeichnet durch** die Schritte
Identifizieren des standortspezifischen Verbindungs-Port an einem Zugangs-Konzentrator (56, 92, 122) in der Form einer Port-Kennung basierend auf dem Standort des Verbindungs-Ports;
Kommunizieren der Port-Kennung zu einer Netzwerkvorrichtung (58, 96, 124);
Speichern der Port-Kennung in einer Datenbank in Kommunikation mit der Netzwerkvorrichtung; und
Identifizieren der Verbindungs-Ports (54), denen eine Netzwerkautorisierung basierend auf der zugehörigen Port-Kennung gewährt worden ist.

11. Ein Verfahren, wie es in Anspruch 10 beansprucht ist, worin das Identifizieren des standortspezifischen Verbindungs-Port (54) an einem Zugangs-Konzentrator (56, 92, 122) das Markieren der Datenpakete (86) mit einer Port-Kennung an dem Zugangs-Konzentrator beinhaltet.

12. Ein Verfahren, wie es in Anspruch 11 beansprucht ist, worin das Kommunizieren der Port-Kennung mit einer Netzwerkvorrichtung (58, 96, 124) das Übertragen der markierten Datenpakete (94) an die Netzwerkvorrichtung beinhaltet.

13. Ein Verfahren wie es in Anspruch 11 oder 12 beansprucht ist, worin das Markieren der Datenpakete (86) mit einer Port-Kennung das Markieren der Datenpakete mit einer Port-Kennung beinhaltet, die zu einer Media access control- (MAC) Adresse korrespondiert.

14. Ein Verfahren wie es in den Ansprüchen 11, 12 oder 13 beansprucht ist, worin das Markieren der Datenpakete (86) mit einer Port-Kennung die Umsetzung des Gebrauchs eines VLAN Protokolls beinhaltet.

15. Ein Verfahren, wie es in einem der vorhergehenden Ansprüche 10 bis 14 beansprucht ist, worin der Zugangs-Konzentrator (56, 92, 122) ein Netzwerkelement beinhaltet, das ein Digital subscriber line access Modul (DSLAM), einen Wireless access point (WAP), ein Cable modem termination System (CMTS) oder Schaltmittel beinhaltet.

16. Ein Verfahren, wie es in Anspruch 10 beansprucht ist, worin das Identifizieren des standortspezifischen Verbindungs-Port (54) an einem Zugangs-Konzentrator (56, 92, 122)
das Übertragen einer Port-abfragenden Anfrage von der Netzwerkvorrichtung (124) an den Zugangs-Konzentrator (122); und
das Übertragen einer Port-identifizierenden Antwort von dem Zugangs-Konzentrator an die Netzwerkvorrichtung beinhaltet.

17. Ein Verfahren, wie es in Anspruch 16 beanspruch ist, worin das Übertragen einer Port-abfragenden Anfrage von der Netzwerkvorrichtung (124) das Übertragen einer SNMP (Simple Network Management Protocol) Anfrage beinhaltet.

18. Ein Verfahren, wie es in Anspruch 16 oder 17 beansprucht ist, worin das Übertragen einer Port-abfragenden Anfrage von der Netzwerkvorrichtung (124) das Übertragen einer XML (Extensible Markup Language) Anfrage beinhaltet.

19. Ein Verfahren, wie es in den Ansprüchen 16, 17 oder 18 beansprucht ist, worin das Übertragen einer Port-identifizierenden Antwort das Übertragen einer Port-Kennung beinhaltet, die mit einer Media access control- (MAC) Adresse korrespondiert.

20. Ein Verfahren, wie es in einem der vorhergehenden Ansprüche 10 bis 19 beansprucht ist, worin die Netzwerkvorrichtung (58, 96, 124) eine Zugangsvorrichtung (124) beinhaltet, die den Teilnehmern einen Netzwerkzugang ermöglicht.

21. Ein Verfahren, wie es in einem der vorhergehenden Ansprüche 10 bis 20 beansprucht ist, worin das Identifizieren des standortspezifischen Verbindungs-Port (54) das Zuordnen einer Port-Kennung zu einem zugehörigen Verbindungs-Port in Erwiderung auf eine anfängliche Übertragung eines Datenpakets (86, 116) von dem Verbindungs-Port beinhaltet.

22. Ein Verfahren, wie es in einem der vorhergehenden Ansprüche 10 bis 21 beansprucht ist, beinhaltend das Zugänglichmachen der Datenbank in Verbindung mit einer Netzwerksystemanwendung um dem Netzwerkteilnehmer die Abrechnungsinformationen zu liefern.

23. Ein Verfahren, wie es in einem der vorhergehenden Ansprüche 10 bis 22 beansprucht ist, beinhaltend das Zugänglichmachen der Datenbank in Verbindung mit einer Netzwerkanwendung, um dem Netzwerkteilnehmer mit den Abrechnungsoptionen zu versorgen.

24. Ein Verfahren, wie es in einem der vorhergehenden Ansprüche 10 bis 23 beansprucht ist, beinhaltend das Ablösen der Port-Kennung von den host-generierten Datenpaketen (86, 116), verursacht durch einen zugehörigen Verbindungs-Port (54) vor der Übertragung der Datenpakte durch das Netzwerk.

## Revendications

1. Dispositif de réseau capable de fournir une identification basée sur l'emplacement à des souscripteurs de réseaux, comprenant
un processeur (58, 96, 124) qui communique avec un concentrateur d'accès (56, 92, 122) pour détérminer des ports de connexion (54) de paquets de données générés par un hôte (86, 116), et
une base de données qui stocke les ports de connexion associés,
**caractérisé en ce que** le processeur (58, 96, 124) détermine des identificateurs respectifs assignés aux ports de connexion respectifs (54) basés sur l'emplacement des ports de connexion, la base de données stocke les identificateurs, et
le processeur (58, 96, 124) identifie des ports de connexion (54) à l'intérieur d'un réseau qui ont obtenu une autorisation de réseau basée sur lesdits identificateurs respectifs.

2. Dispositif de réseau selon la revendication 1, dans lequel le processeur (58, 96, 124) lit un identificateur dans une partie marquée du paquet de données (88) pour déterminer des ports de connexion (54) de paquets de données générés par l'hôte (86, 116).

3. Dispositif de réseau selon la revendication 1 ou 2, dans lequel le processeur (58, 96) utilise un protocole VLAN en tant que lien de communication entre le processeur et le concentrateur d'accès (56, 92).

4. Dispositif de réseau selon la revendication 1, dans lequel le processeur comprend un agent d'interrogation capable de demander des données d'identification relatives au port de connexion (54) des paquets de données générés par l'hôte (116).

5. Dispositif de réseau selon la revendication 4, dans lequel l'agent d'interrogation utilise Simple Network Management Protocol (SNMP) en tant que lien de communication entre le dispositif de réseau et le concentrateur d'accès (122).

6. Dispositif de réseau selon la revendication 4 ou 5, dans lequel l'agent d'interrogation utilise Extensible Markup Language (XML) en tant que lien de communication entre le dispositif de réseau et le concentrateur d'accès (122).

7. Dispositif de réseau selon l'une quelconque des revendications précédentes, dans lequel le processeur (58, 96, 124) détermine l'identificateur associé à un port de connexion respectif (54) en réponse à une transmission initiale d'un paquet de données (86, 116) issu du port de connexion.

8. Dispositif de réseau selon l'une quelconque des revendications précédentes, dans lequel le processeur (58, 96, 124) accède à la base de données en conjonction avec une application de système de réseau pour fournir une information de facturation au souscripteur de réseau.

9. Dispositif de réseau selon l'une quelconque des revendications précédentes, dans lequel le processeur (58, 96, 124) accède à la base de données en conjonction avec une application de système de réseau pour fournir aux souscripteurs de réseau des options de facturation.

10. Procédé pour mettre en oeuvre une identification basée sur l'emplacement dans un réseau de communications, comprenant les étapes :
établir une connexion de réseau entre un hôte (52, 82, 112) et un réseau ;
transmettre des paquets de données (86, 116) issus de l'hôte par l'intermédiaire d'un port de connexion spécifique à l'emplacement (54) ; **caractérisé par** les étapes de
identifier le port de connexion spécifique à l'emplacement au niveau d'un concentrateur d'accès (56, 92, 122) sous la forme d'un identificateur de port basé sur l'emplacement du port de connexion ;
communiquer l'identificateur de port à un dispositif de réseau (58, 96, 124) ;
stocker l'identificateur de port dans une base de données en communication avec le dispositif de réseau ; et
identifier des ports de connexion (54) qui ont obtenu une autorisation de réseau basée sur les identificateurs de ports respectifs.

11. Procédé selon la revendication 10, dans lequel J'étape d'identification du port de connexion spécifique à l'emplacement (54) au niveau du concentrateur d'accès (56, 92, 122) comprend de marquer les paquets de données (86) avec un identificateur de port au niveau du concentrateur d'accès.

12. Procédé selon la revendication 11, dans lequel l'étape de communiquer l'identificateur de port à un dispositif de réseau (58, 96, 124) comprend de transmettre les paquets de données marqués (94) au dispositif de réseau.

13. Procédé selon la revendication 11 ou 12, dans lequel l'étape de marquer les paquets de données (86) avec un identificateur de port comprend de marquer les paquets avec un identificateur de port qui correspond à une adresse Media Access Control (MAC).

14. Procédé selon la revendication 11, 12 ou 13, dans lequel l'étape de marquer les paquets de données (86) avec un identificateur de port comprend de mettre en oeuvre l'utilisation d'un protocole VLAN.

15. Procédé selon l'une quelconque des revendications 10 à 14, dans lequel le concentrateur d'accès (56, 92, 122) comprend un élément de réseau comprenant un Digital Subscriber Line Access Module (DSLAM), un point d'accès à un réseau sans fil (Wireless Access Point (WAP)), un Cable Modem Termination System (CMTS), ou un dispositif de commutation.

16. Procédé selon la revendication 10, dans lequel l'étape d'identifier le port de connexion spécifique à l'emplacement (54) au niveau d'un concentrateur d'accès (56, 92, 122) comprend :
transmettre une interrogation de demande de port issu du dispositif de réseau (124) à un concentrateur d'accès (122) ; et
transmettre une réponse d'identification de port issue du concentrateur d'accès au dispositif de réseau.

17. Procédé selon la revendication 16, dans lequel l'étape de transmettre une interrogation de demande de port issue du dispositif de réseau (124) comprend de transmettre une interrogation SNMP (Simple Network Management Protocol).

18. Procédé selon la revendication 16 ou 17, dans lequel l'étape de transmettre une interrogation de demande de port issue du dispositif de réseau (124) comprend de transmettre une interrogation XML (Extensible Markup Language).

19. Procédé selon la revendication 16, 17 ou 18, dans lequel l'étape de transmettre une réponse d'identification de port comprend de transmettre un identificateur de port qui correspond à une adresse Media Access Control (MAC).

20. Procédé selon l'une quelconque des revendications 10 à 19, dans lequel le dispositif de réseau (58, 96, 124) comprend un dispositif de passerelle (124) qui fournit un accès de réseau aux souscripteurs.

21. Procédé selon l'une quelconque des revendications 10 à 20, dans lequel l'étape d'identifier le port de connexion spécifique à l'emplacement (54) comprend d'assigner un identificateur de port à un port de connexion respectif en réponse à une transmission initiale d'un paquet de données (86, 116) issu du port de connexion.

22. Procédé selon l'une quelconque des revendications 10 à 21, comprenant d'accéder à la base de données en conjonction avec une application de système de réseau pour fournir une information de facturation au souscripteur de réseau.

23. Procédé selon l'une quelconque des revendications 10 à 22, comprenant d'accéder à la base de données en conjonction avec une application de réseau pour fournir aux souscripteurs de réseau des options de facturation.

24. Procédé selon l'une quelconque des revendications 10 à 23, comprenant d'éliminer l'identificateur de ports des paquets de données générés par l'hôte (86, 116) issus d'un port de connexion respectif (54) avant la transmission des paquets de données à travers le réseau.
